# EUROPÄISCHE PATENTSCHRIFT

(11) **EP 1 426 776 B1**
(45) Veröffentlichungstag und Bekanntmachung des Hinweises auf die Patenterteilung: **05.12.2007**
(21) Anmeldenummer: 03024472.7
(22) Anmeldetag: 23.10.2003
(51) Int. Cl.: G01R 31/00, G01M 17/007

(54) **Testvorrichtung sowie Produktionsverfahren unter Verwendung einer solchen Testvorrichtung**
Testing device and method of production using this testing device
Dispositif pour tester et procédé de production utilisant le dispositif pour tester

(30) Priorität: 13.11.2002 DE 10252853
(43) Veröffentlichungstag der Anmeldung: 09.06.2004
(73) Patentinhaber: SIEMENS AKTIENGESELLSCHAFT, 80333 München (DE)
(72) Erfinder: Smidt, Gernot, 91180 Heideck (DE); Wolfrum, Klaus, 91052 Erlangen (DE)

(56) Entgegenhaltungen:
- US-A- 4 796 206
- US-A- 4 831 560
- US-A- 5 506 772
- US-A- 6 021 366
- HERMANN C: "AL AUTOMATES CAR DIAGNOSTICS" AUTOMOTIVE ENGINEER, MECHANICAL ENGINEERING PUBL.LTD. BURY ST.EDMUNDS, GB, Bd. 18, Nr. 6, 1. Dezember 1993 (1993-12-01), Seiten 44-45, XP000418256 ISSN: 0307-6490
- DENDORFER J ET AL: "FUNKTIONSTEST DER HARDWARE ELEKTRONISCHER BAUGRUPPER FUER DIE FAHRZEUGTECHNIK" TECHNISCHES MESSEN TM, R.OLDENBOURG VERLAG. MUNCHEN, DE, Bd. 63, Nr. 10, 1. Oktober 1996 (1996-10-01), Seiten 356-360, XP000636841 ISSN: 0171-8096
- KROEMNKE C ET AL: "FUNKTIONSTEST VON ELEKTRONISCHEN FAHRZEUGSTEUERGERAETEN" TECHNISCHES MESSEN TM, R.OLDENBOURG VERLAG. MUNCHEN, DE, Bd. 63, Nr. 10, 1. Oktober 1996 (1996-10-01), Seiten 361-370, XP000636842 ISSN: 0171-8096

## Beschreibung

Die Erfindung betrifft eine Testvorrichtung gemäß dem Oberbegriff des Patentanspruchs 1. Des Weiteren betrifft die Erfindung ein Produktionsverfahren unter Verwendung einer solchen Testvorrichtung gemäß dem Oberbegriff des Patentanspruchs 9.

Bei der Produktion von Kraftfahrzeugen werden die Kraftfahrzeuge in einem sogenannten Linienbereich der Produktion unter Verwendung von Testvorrichtungen, die zum Beispiel über ein Kabel an eine Elektronik des Kraftfahrzeugs angeschlossen werden, hinsichtlich bestimmter Eigenschaften getestet. Nach dem Stand der Technik kommen hierbei Testvorrichtungen zum Einsatz, in denen Programmfiles, insbesondere Testfiles, nacheinander abgearbeitet werden. Jedes der Testfiles dient der Überprüfung, ob eine der vorbestimmten Eigenschaften erfüllt ist. Das Vorhandensein oder Nichtvorhandensein der vorbestimmten Eigenschaften wird protokolliert. Wird ein Nichtvorhandensein einer vorbestimmten Eigenschaft festgestellt, so wird eine entsprechende Fehlermeldung generiert. Die aus dem Stand der Technik bekannten Testvorrichtungen können lediglich das Vorhandensein oder Nichtvorhandensein der vorbestimmten Eigenschaften überprüfen, protokollieren und gegebenenfalls eine entsprechende Fehlermeldung erzeugen, so wie bei der US 6.021,366. Bei der Produktion nach dem Stand der Technik werden Kraftfahrzeuge, bei denen mithilfe einer solchen Testvorrichtung im Linienbereich der Produktion ein oder auch mehrere Fehlermeldungen generiert wurden, später einem Reparaturbereich zugeführt.

Im Reparaturbereich wird dann das Kraftfahrzeug dahingehend bearbeitet, dass die im Linienbereich erzeugte Fehlermeldung behoben wird. Hierzu kommt eine separate Reparaturvorrichtung zum Einsatz, die der Diagnose sowie Behebung der Fehlermeldung dient, siehe z.B. die US 4,796,206. Nach dem Stand der Technik handelt es sich bei den Testvorrichtungen, die im Linienbereich der Produktion zum Einsatz kommen, und bei den Reparaturvorrichtungen, die im Reparaturbereich der Produktion verwendet werden, um komplett unterschiedliche Vorrichtungen. Nach dem Stand der Technik unterscheiden sich die Testvorrichtungen sowie die Reparaturvorrichtung hinsichtlich ihrer Hardware- sowie Softwareeigenschaften. Das bedeutet, dass in der Produktion sowie in der Produktionsvorbereitung unterschiedliche Systeme verwaltet und gepflegt werden müssen. Soll zum Beispiel bedingt durch eine Modellpflege eines Kraftfahrzeugs die Produktion angepasst werden, so müssen sowohl die Programmfiles, insbesondere die Testfiles, auf den Testvorrichtungen als auch Reparaturfiles auf den Reparaturvorrichtungen entsprechend umprogrammiert werden. Hierzu sind bislang in der Produktionsvorbereitung unterschiedliche Teams beschäftigt, da sich die Testvorrichtungen und Reparaturvorrichtungen stark voneinander unterscheiden. Dies macht einen hohen Personalaufwand und Verwaltungsaufwand erforderlich, wodurch die Kosten des Produktionsverfahrens negativ beeinflusst werden.

Hiervon ausgehend liegt der vorliegenden Erfindung das Problem zu Grunde eine neuartige Testvorrichtung und ein Produktionsverfahren unter Verwendung einer solchen Testvorrichtung zu schaffen. Dieses Problem wird dadurch gelöst, dass die eingangs genannte Testvorrichtung durch die Merkmale des kennzeichnenden Teils des Patentanspruchs 1 weitergebildet ist.

Erfindungsgemäß weist die Programablaufsteuerung der Testvorrichtung Mittel zur Diagnose und/oder Behebung der bei Nichtvorhandensein einer vorbestimmten Eigenschaft generierten Fehlermeldung auf. Hierdurch ist es möglich, die bislang in getrennten Reparaturvorrichtungen realisierten Funktionen in die Testvorrichtung zu integrieren. Hierdurch wird der Aufwand in der Produktion sowie Produktionsvorbereitung erheblich reduziert, was Kosteneinsparungen zu Folge hat.

Das erfindungsgemäße Produktionsverfahren ist durch die Merkmale des unabhängigen Patentanspruchs 9 gekennzeichnet.

Bevorzugte Weiterbildungen der Erfindung ergeben sich aus den abhängigen Ansprüchen und der nachfolgenden Beschreibung.

Nachfolgend wird ein bevorzugtes Ausführungsbeispiel der Erfindung anhand der Zeichnung näher erläutert. In der Zeichnung zeigt:
- Fig. 1: ein schematisiertes Blockschaltbild zur Verdeutlichung des erfindungsgemäßen Produktionsverfahrens;
- Fig. 2: ein schematisiertes Blockschaltbild der erfindungsgemäßen Testvorrichtung.

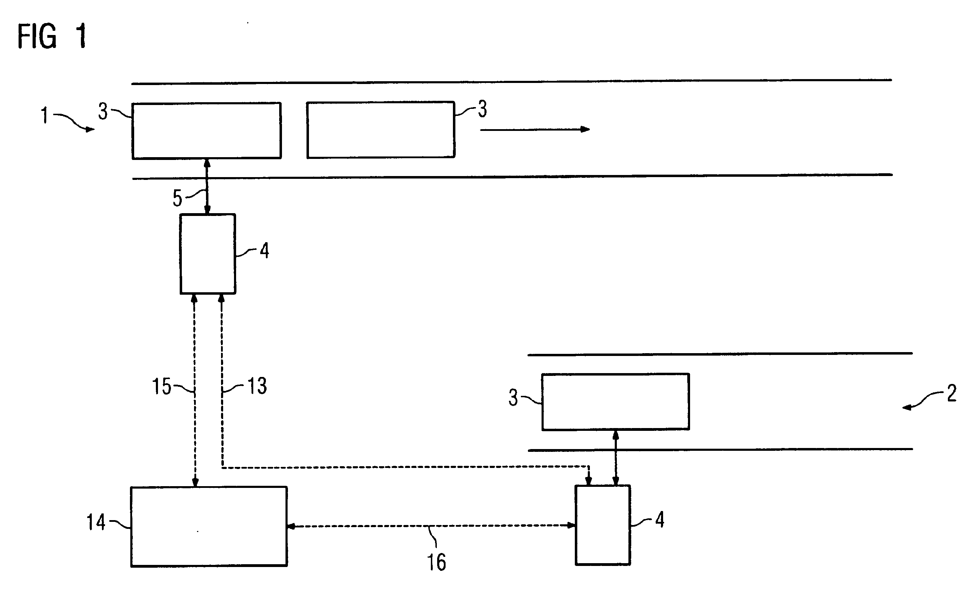

Fig. 1 zeigt ein Produktionsverfahren, wie es üblicherweise bei der Produktion von Kraftfahrzeugen verwendet wird.

In der Produktion von Kraftfahrzeugen unterscheidet man einen sogenannten Linienbereich 1 von einem Reparaturbereich 2. Durch den Linienbereich 1 der Produktion werden Kraftfahrzeuge 3 nach einem vorbestimmten Takt bewegt und dabei bearbeitet. Im hier gezeigten Ausführungsbeispiel handelt es sich bei der Bearbeitung der Kraftfahrzeuge 3 im Linienbereich 1 der Produktion um ein Überprüfen bzw. Testen der herzustellenden Kraftfahrzeuge 3 in einer Art und Weise, dass festgestellt wird, ob die Kraftfahrzeuge 3 vorbestimmte Eigenschaften erfüllen. Hierzu kommt eine Testvorrichtung 4 zum Einsatz. Die Testvorrichtung 4 wird zum Beispiel mithilfe eines Kabels an das herzustellende Kraftfahrzeug angeschlossen, wobei zwischen dem Kraftfahrzeug 3 und der Testvorrichtung 4 im Sinne des Doppelpfeils 5 Daten ausgetauscht werden können.

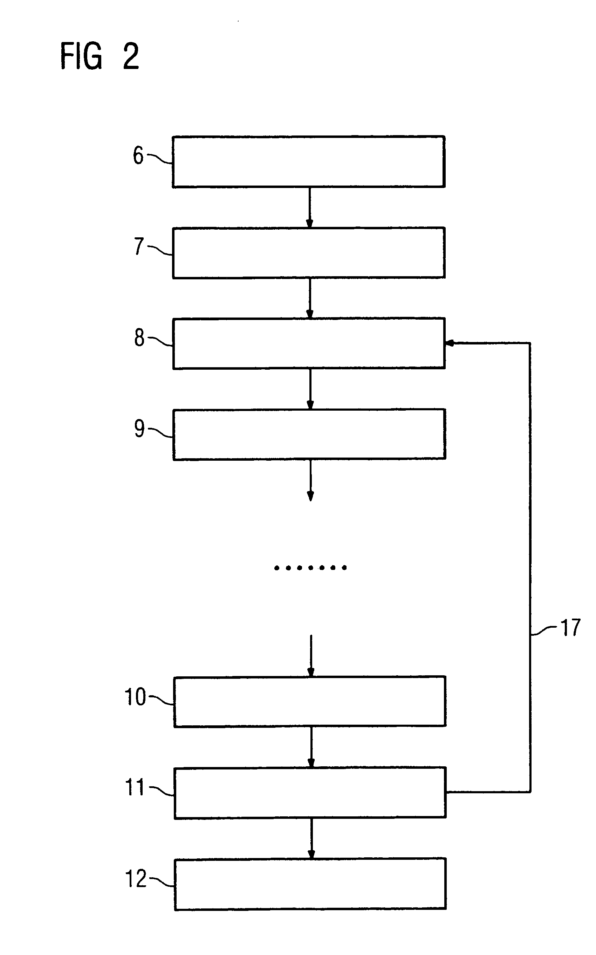

Die Testvorrichtung 4 verfügt über eine Programmablaufsteuerung, die das Abarbeiten von auf der Testvorrichtung 4 gespeicherten Programmfiles, nämlich Testfiles, koordiniert. So zeigt Fig. 2 stark schematisiert mehrere Testmodule 6, 7, 8, 9, 10, 11 und 12, wobei diese Testmodule 6 bis 12 von der Testvorrichtung 4 nacheinander abgearbeitet werden. Jedes der Testmodule 6 bis 12 dient der Überprüfung, ob eine der vorbestimmten Eigenschaften vom herzustellenden Kraftfahrzeug 3 erfüllt wird. Wird beim Abarbeiten der Testmodule 6 bis 12 festgestellt, dass zum Beispiel eine der vorbestimmten Eigenschaften am herzustellenden Kraftfahrzeug 3 nicht vorhanden ist bzw. von demselben nicht erfüllt wird, so erzeugt die Testvorrichtung 4 eine Fehlermeldung. Diese Fehlermeldung wird in der Testvorrichtung 4 gespeichert und ausgewertet und zum Beispiel visualisiert. Bei Nichtvorhandensein einer vorbestimmten Eigenschaft wird also eine entsprechende Fehlermeldung generiert und protokolliert.

Nach dem Stand der Technik sind die Testvorrichtungen 4 des Linienbereichs 1 nicht in der Lage, die Diagnose und/oder Behebung einer Fehlermeldung durchzuführen. Testvorrichtungen nach dem Stand der Technik können demnach nur im Sinne eines Ja/Nein-Kriteriums feststellen, ob die vorbestimmten Eigenschaften erfüllt sind oder nicht.

Erfindungsgemäß umfasst die Programmablaufsteuerung der erfindungsgemäßen Testvorrichtung 4 Mittel zur Diagnose und/oder Behebung der bei Nichtvorhandensein einer vorbestimmten Eigenschaft generierten Fehlermeldung. Die erfindungsgemäßen Testvorrichtungen 4 werden demnach einer erweiterten Funktionalität zugeführt.

Wird zum Beispiel während des Testens bzw. Überprüfens der herzustellenden Kraftfahrzeuge 3 im Linienbereich 1 der Produktion festgestellt, dass bei einem herzustellenden Kraftfahrzeug 3 eine vorbestimmte Eigenschaft nicht erfüllt ist, so wird von der erfindungsgemäßen Testvorrichtung 4 eine entsprechende Fehlermeldung erzeugt, die vorzugsweise klassifiziert ist. Anhand dieser Klassifikation der Fehlermeldung wird von der erfindungsgemäßen Testvorrichtung 4 automatisch entschieden, ob unmittelbar im Linienbereich 1 der Produktion eine Diagnose und/oder Behebung der Fehlermeldung durchgeführt werden kann. Ist dies der Fall, so werden von der Testvorrichtung 4 unmittelbar die Mittel zur Diagnose und/oder Behebung der Fehlermeldung aktiviert. Das Kraftzeug 3 kann dann unmittelbar im Linienbereich 1 repariert werden und muss dann nicht dem Reparaturbereich 2 der Produktion zugeführt werden.

Stellt die erfindungsgemäße Testvorrichtung 4 jedoch anhand der Fehlerklassifikation fest, dass zur Diagnose und/oder Behebung der Fehlermeldung voraussichtlich eine längere Zeit benötigt wird, so wird die Fehlermeldung lediglich in der Testvorrichtung 4 gespeichert und zur weiteren Steuerung der Produktion verwendet, zum Beispiel auch zur Visualisierung des Fehlers. Die Diagnose und/oder Behebung der Fehlermeldung erfolgt dann im Reparaturbereich 2 der Produktion. Hierdurch ist dann sichergestellt, dass die Produktion im Linienbereich 1 nicht verlangsamt wird.

Im Sinne der Erfindung ist es möglich, dass die identische Testeinrichtung 4, die auch im Linienbereich 1 der Produktion zum Einsatz kommt, für den Reparaturbereich 2 zu verwenden. In diesem Fall muss lediglich die in der Testvorrichtung 4 gespeicherte Fehlermeldung im Reparaturbereich 2 zur Aktivierung der Mittel zur Diagnose und/oder Behebung der Fehlermeldung aktiviert werden. Bevorzugt ist jedoch eine Ausgestaltung, bei der zwar nicht die im Linienbereich 1 verwendete Testvorrichtung 4 im Reparaturbereich 2 zum Einsatz kommt, sondern vielmehr eine Testeinrichtung 4 mit identischer Software und damit identischem Funktionsumfang. In diesem Fall muss dann lediglich sichergestellt werden, dass eine Fehlermeldung, die mithilfe einer im Linienbereich 1 verwendeten Testvorrichtung 4 generiert wurde, der im Reparaturbereich 2 verwendeten Testvorrichtung 4 zur Verfügung gestellt wird.

So zeigt Fig. 1, dass im Sinne des Doppelpfeils 13 unmittelbar eine Kommunikation zwischen den baugleichen Testeinrichtungen 4 des Linienbereichs 1 sowie des Reparaturbereichs 2 der Produktion stattfinden kann. Hierzu sind den Testvorrichtungen 4 Sende- und/oder Empfangseinrichtungen zugeordnet, die dem Datenaustausch dienen. Vorzugsweise erfolgt die Kommunikation zwischen den baugleichen Testvorrichtungen 4 drahtlos über Funk.

Weiterhin ist vorstellbar, dass die Kommunikation zwischen den Testeinrichtungen 4 unter Zwischenschaltung eines Prozessleitsystems 14 erfolgt. In diesem Fall werden die von einer im Linienbereich 1 der Produktion eingesetzten Testvorrichtung 4 erzeugten Fehlermeldungen im Sinne des Doppelpfeils 15 dem Prozessleitsystem 14 übertragen. Das Prozessleitsystem 14 übermittelt im Sinne des Doppelpfeils 16 dann die Fehlermeldung an eine im Reparaturbereich 2 der Produktion eingesetzte Testvorrichtung 4. Bei Verwendung eines Prozessleitsystems 14 ist eine zentrale Verwaltung aller im Linienbereich 1 erzeugten Fehlermeldungen möglich. Darüber hinaus kann mithilfe des Prozessleitsystems 14 zentral überwacht werden, ob auch alle generierten Fehlermeldungen entweder unmittelbar im Linienbereich 1 der Produktion oder später im Reparaturbereich 2 der Produktion einer Diagnose und/oder Behebung unterzogen worden sind.

Die Mittel der Programmablaufsteuerung zur Diagnose und/oder Behebung einer Fehlermeldung binden einen den Testmodulen 6 bis 12 zugrundeliegenden Programmcode teilweise oder vollständig in eine Wiederholungsschleife 17 ein. Hierdurch ist sichergestellt, dass bereits ein für die Testmodule 6 bis 12 erzeugter Programmcode für die Diagnose- und/oder Behebungsfunktionen wiederverwendet werden kann. Wird zum Beispiel bei Abarbeiten der Testmodule 6 bis 12 eine Fehlermeldung generiert, weil eine vorbestimmte Eigenschaft nicht erfüllt ist, so werden von der Programmablaufsteuerung die Mittel zur Diagnose und/oder Behebung der Fehlermeldung vorzugsweise automatisch aktiviert. In diesem Fall wird von der Programmablaufsteuerung ein Diagnose- und/oder Reparaturfenster geöffnet. Im Hintergrund dieses Diagnose- und/oder Reparaturfensters wird der zur Diagnose und/oder Behebung der entsprechende Fehlermeldung zu einer Wiederholungsschleife 17 zusammengebundene Programmcode solange wiederholt, bis die Diagnose und/oder Behebung des Fehlers abgeschlossen ist. Dabei werden Ergebnisse des während der Wiederholungsschleife abgearbeiteten Programmcodes in dem Diagnose- und/oder Reparaturfenster fortlaufend aktualisiert sowie visualisiert.

Es ist auch vorstellbar, dass die Programmablaufsteuerung bei Generierung einer Fehlermeldung diese auf einer Anzeigeeinrichtung der Testvorrichtung 4 anzeigt und auf eine manuelle Aktivierung der Mittel zur Diagnose und/oder Behebung der Fehlermeldung wartet. Dies ist insbesondere dann der Fall, wenn aufgrund der Klassifizierung der Fehlermeldung festgestellt wird, dass eine Diagnose und/oder Behebung der Fehlermeldung im Reparaturbereich 2 der Produktion erfolgen soll.

Im Sinne der Erfindung wird demnach eine Testvorrichtung zum Überprüfen bzw. Testen herzustellender Gegenstände vorgeschlagen, die zusätzlich zum bloßen Abarbeiten von Testfiles und Generieren von Fehlermeldungen beim Nichtvorhandensein vorbestimmter Eigenschaften auch Mittel zur Diagnose und/oder Behebung der entsprechenden Fehlermeldung aufweist. Hierdurch werden nach dem Stand der Technik in unterschiedlichen Vorrichtungen realisierte Funktionen in der erfindungsgemäßen Testvorrichtung 4 zusammengefasst. Es muss dann lediglich noch ein System gewartet und gepflegt werden. Der Aufwand in der Produktion, insbesondere in der Produktionsvorbereitung, wird hierdurch erheblich reduziert. Es kann Personal eingespart werden, wodurch sich die Produktion kostengünstiger realisieren lässt.

## Patentansprüche

1. Testvorrichtung zum Überprüfen bzw. Testen, ob herzustellende Kraftfahrzeuge (3) im Linienbereich der Kraftfahrzeugproduktion vorbestimmte Eigenschaften erfüllen, mit einer Programmablaufsteuerung, die Testmodule (6, 7, 8, 9, 10, 11, 12) nacheinander abarbeitet, bei Abarbeitung der Testmodule (6, 7, 8, 9, 10, 11, 12) das Vorhandensein oder Nichtvorhandensein der vorbestimmten Eigenschaften überprüft sowie protokolliert, und bei Nichtvorhandensein einer der vorbestimmtem Eigenschaften eine entsprechende Fehlermeldung generiert, wobei die Programmablaufsteuerung Mittel aufweist zur Diagnose und Behebung der bei Nichtvorhandensein einer vorbestimmten Eigenschaft generierten Fehlermeldung **dadurch gekennzeichnet, dass** die die Programmablaufteuerung eingerichtet ist, die generierte Fehlermeldung zu klassifizieren und abhängig von dieser Klassifikation die Diagnose und Behebung der Fehlermeldung unmittelbar im Anschluss an die Generierung derselben oder zu einem späteren Zeitpunkt durchzuführen.

2. Testvorrichtung nach Anspruch 1, **dadurch gekennzeichnet, dass** die bei Nichtvorhandensein einer vorbestimmten Eigenschaft generierte Fehlermeldung auf einer Anzeigeinrichtung visualisierbar und in einer Speichereinrichtung speicherbar ist.

3. Testvorrichtung nach Anspruch 1 oder 2, **gekennzeichnet durch** eine Sende- und/oder Empfangseinrichtung, wobei mit Hilfe der Sende- und/oder Empfangseinrichtung die generierten Fehlermeldungen von der Testeinrichtung (4) an ein Prozessleitsystem (14) und/oder an eine andere Testeinrichtung (4) übertragbar sind.

4. Testvorrichtung nach Anspruch 3, **dadurch gekennzeichnet, dass** mit Hilfe der Sende- und/oder Empfangseinrichtung von einer anderen Testeinrichtung (4) generierte Fehlermeldungen und/oder von einem Prozessleitsystem (14) weitergeleitete Fehlermeldungen empfangbar sind.

5. Testvorrichtung einem oder mehreren der Ansprüche 1 bis 4, **dadurch gekennzeichnet, dass** die Mittel zur Diagnose und Behebung einer Fehlermeldung einen den Testmodulen (6, 7, 8, 9, 10, 11, 12) zugrunde liegenden Programmcode zumindest teilweise in eine Wiederholungsschleife (17) einbinden.

6. Testvorrichtung nach Anspruch 5, **dadurch gekennzeichnet, dass** Ergebnisse des während der Wiederholungsschleife (17) abgearbeiteten Programmcodes in einer separaten Anzeigeeinrichtung, insbesondere in einem Diagnose- und/oder Reparaturfenster, fortlaufend aktualisiert und visualisiert werden, bis die Diagnose und Behebung der Fehlermeldung abgeschlossen ist.

7. Testvorrichtung nach Anspruch 6, **dadurch gekennzeichnet, dass** eine Aktivierung der Mittel zur Diagnose und Behebung der Fehlermeldung automatisch oder manuell erfolgt.

8. Produktionsverfahren unter Verwendung einer Testvorrichtung (4) nach einem oder mehreren der Ansprüche 1 bis 7, wobei herzustellende Gegenstände (3) in einem Linienbereich (1) des Produktionsverfahrens derart überprüft werden, ob die jeweiligen Gegenstände (3) vorbestimmte Eigenschaften erfüllen, wobei das Vorhandensein oder Nichtvorhandensein der vorbestimmten Eigenschaften überprüft sowie protokolliert wird, und wobei bei Nichtvorhandensein einer der vorbestimmtem Eigenschaften eine entsprechende Fehlermeldung generiert wird, **dadurch gekennzeichnet, dass** zur Diagnose und Behebung der bei Nichtvorhandensein einer vorbestimmten Eigenschaft generierten Fehlermeldung die identische Testvorrichtung (4) oder Testvorrichtung (4) mit gleicher Software verwendet wird und dass die generierte Fehlermeldung klassifiziert wird, wobei abhängig von dieser Klassifikation der Fehlermeldung automatisch ermittelt wird, ob die Diagnose und Behebung der Fehlermeldung unmittelbar im Linienbereich (1) oder später in dem nachgeschalteten Reparaturbereich (2) durchgeführt wird.

9. Produktionsverfahren nach Anspruch 8, **dadurch gekennzeichnet, dass** die unter Verwendung einer Testvorrichtung (4) generierte Fehlermeldung in derselben Testvorrichtung (4) gespeichert und visualisiert wird.

10. Produktionsverfahren nach Anspruch 8 oder 9, **dadurch gekennzeichnet, dass** die unter Verwendung einer Testvorrichtung (4) generierte Fehlermeldung an ein Prozessleitsystem (14) und/oder an eine andere Testeinrichtung (4) mit gleicher Software übertragen wird.

11. Produktionsverfahren nach einem oder mehreren der Ansprüche 8 bis 10, **dadurch gekennzeichnet, dass** die Diagnose und Behebung einer Fehlermeldung entweder unmittelbar in dem Linienbereich (1) des Produktionsverfahrens oder später in einem nachgeschalteten Reparaturbereich (2) durchgeführt wird.

## Claims

1. Test facility for checking or testing whether motor vehicles (3) to be manufactured in the line area of motor vehicle production fulfil predetermined characteristics, with a program scheduler, which processes test modules (6, 7, 8, 9, 10, 11, 12) one after the other, checking during processing of the test modules (6, 7, 8, 9, 10, 11, 12) for the presence or absence of one of the predetermined characteristics and logging this and, in the absence of one of the predetermined characteristics, generating a corresponding error message, with the program scheduler featuring means for diagnosis and rectification of the error message generated in the absence of a predetermined characteristic, **characterized in that** the program scheduler is configured to classify the generated error message and, depending on this classification, to execute the diagnosis and rectification of the message directly after said message has been generated or at a later point in time.

2. Test facility in accordance with claim 1, **characterized in that** the error message generated in the absence of a predetermined characteristic is able to be visualized on a display device and is able to be stored in a memory device.

3. Test facility in accordance with claim 1 or 2, identified by a transmit and/or receive device, with the generated error messages able to be transmitted with the aid of the transmit and/or receive device from the test facility (4) to a process control system (14) and/or to another test facility (4).

4. Test facility in accordance with claim 3; **characterized in that** error messages generated by another test facility (4) and/or forwarded by a process control system (14) are able to be received with the aid of the transmit and/or receive device.

5. Test facility in accordance with one of the claims 1-4, **characterized in that** the means for diagnosis and rectification of an error message link-in program code on which one of the test modules (6, 7, 8, 9, 10, 11, 12) is based at least partly into a repetition loop (17).

6. Test facility in accordance with claim 5, **characterized in that** results of the program code processed during the repetition loop (17) are continuously updated and visualized in a separate display device, especially in a diagnosis and/or repair window, until the diagnosis and rectification of the error message is completed.

7. Test facility in accordance with claim 6, **characterized in that** the means for diagnosis and rectification of the error message are activated automatically or manually.

8. Production method using a test facility (4) in accordance with one or more of claims 1 to 7, with objects to be manufactured (3) in a line area (1) of the production process being checked so as to establish whether the respective objects (3) fulfil predetermined characteristics, with the presence or absence of predetermined characteristics being checked and logged, and with, in the absence of one of the predetermined characteristics, a corresponding error message being generated, **characterized in that**, for diagnosis and rectification of the error message generated in the absence of a predetermined characteristic, the identical test facility (4) or a test facility (4) with the same software is used and that the generated error message is classified, with it being determined automatically as a function of this classification of the error message whether the diagnosis and rectification of the error message will be performed directly in the line area (1) or later in the downstream repair area (2).

9. Production method in accordance with claim 8, **characterized in that** the error message generated using a test facility (4) is stored and visualized in the same test facility.

10. Production method in accordance with claim 8 or 9, **characterized in that** the error message generated using a test facility (4) is transmitted to a process control system (14) and/or to another test facility (4) with the same software.

11. Production method in accordance with one or more of claims 8 to 10, **characterized in that** the diagnosis and rectification of an error message is undertaken either directly in the line area (1) of the production method or later in a downstream repair area (2).

## Revendications

1. Installation de test pour vérifier ou tester si les véhicules automobiles (3) à fabriquer satisfont à des propriétés prédéfinies dans la zone où les véhicules automobiles sont fabriqués à la chaîne, ladite installation comportant une commande de déroulement de programme qui exécute successivement des modules de test (6, 7, 8, 9, 10, 11, 12), qui lors de l'exécution des modules de test (6, 7, 8, 9, 10, 11, 12) vérifie que les propriétés prédéfinies sont présentes ou absentes et produit un compte rendu et qui produit un message d'erreur correspondant quand une des propriétés prédéfinies est absente, la commande de déroulement de programme étant munie de moyens pour diagnostiquer et pour supprimer le message d'erreur produit quand une propriété prédéfinie est absente,
**caractérisée en ce que** la commande de déroulement de programme est conçue pour classer le message d'erreur produit et, en fonction de ce classement, procéder au diagnostic et à la suppression du message d'erreur immédiatement après qu'il a été produit ou à un instant ultérieur.

2. Installation de test selon la revendication 1, **caractérisée en ce que** le message d'erreur produit quand une propriété prédéfinie est absente peut être visualisé sur un dispositif d'affichage et mémorisé dans un dispositif de mémorisation.

3. Installation de test selon la revendication 1 ou 2, **caractérisée par** un dispositif d'émission et/ou de réception, le dispositif d'émission et/ou de réception permettant de transférer les messages d'erreur produits depuis le dispositif de test (4) à un système de pilotage des processus (14) et/ou à un autre dispositif de test (4).

4. Installation de test selon la revendication 3, **caractérisée en ce que** le dispositif d'émission et/ou de réception permet de recevoir des messages d'erreur produits par un autre dispositif de test (4) et/ou des messages d'erreur retransmis par un système de pilotage des processus (14).

5. Installation de test selon une ou plusieurs des revendications 1 à 4, **caractérisée en ce que** les moyens pour diagnostiquer et pour supprimer un message d'erreur comprennent au moins en partie dans une boucle de répétition (17) un code de programme sous-jacent aux modules de test (6, 7, 8, 9, 10, 11, 12).

6. Installation de test selon la revendication 5, **caractérisée en ce que** des résultats du code de programme exécuté pendant la boucle de répétition (17) sont constamment mis à jour et visualisés dans un dispositif distinct d'affichage, en particulier dans une fenêtre de diagnostic et/ou de réparation, jusqu'à ce que le diagnostic et la suppression du message d'erreur soient terminés.

7. Installation de test selon la revendication 6, **caractérisée en ce que** les moyens pour diagnostiquer et pour supprimer le message d'erreur sont activés automatiquement ou manuellement.

8. Procédé de production qui utilise une installation de test (4) selon une ou plusieurs des revendications 1 à 7, selon lequel
les objets (3) à réaliser sont vérifiés dans une zone de fabrication à la chaîne (1) du procédé de production de telle manière que soit vérifié si chacun des objets (3) satisfait à des propriétés prédéfinies,
la présence ou l'absence des propriétés prédéfinies est vérifiée et fait l'objet d'un compte rendu
et un message d'erreur correspondant est produit quand une des propriétés prédéfinies est absente,
**caractérisé en ce que**, pour diagnostiquer et pour supprimer le message d'erreur produit quand une propriété prédéfinie est absente, on utilise la même installation de test (4) ou une installation de test (4) équipée du même logiciel et que le message d'erreur produit est classé, on détermine alors automatiquement en fonction de ce classement des messages d'erreur si on procède au diagnostic et à la suppression du message d'erreur immédiatement dans la zone de fabrication à la chaîne (1) ou ultérieurement dans la zone de réparation (2) en aval.

9. Procédé de production selon la revendication 8, **caractérisé en ce que** le message d'erreur produit en utilisant une installation de test (4) est mémorisé et visualisé dans la même installation de test (4).

10. Procédé de production selon la revendication 8 ou 9, **caractérisé en ce que** le message d'erreur produit en utilisant une installation de test (4) est transmis à un système de pilotage des processus (14) et/ou à un autre dispositif de test (4) équipé du même logiciel.

11. Procédé de production selon une ou plusieurs des revendications 8 à 10, **caractérisé en ce qu'**on procède au diagnostic et à la suppression d'un message d'erreur soit immédiatement dans la zone de fabrication à la chaîne (1) du procédé de production soit ultérieurement dans une zone de réparation (2) en aval.
